# EUROPEAN PATENT APPLICATION

(11) **EP 2 198 705 A1**
(43) Date of publication of application: **23.06.2010**
(21) Application number: 09015621.7
(22) Date of filing: 17.12.2009
(51) Int. Cl.: A01K 83/06

(54) **Bait hooking device, particularly for sport fishing**

(30) Priority: 19.12.2008 IT BL20080008 U
(71) Applicant: Rasera Berna, Andrea, 32100 Belluno (IT)
(72) Inventor: Rasera Berna, Andrea, 32100 Belluno (IT)
(74) Representative: Beszédes, Stephan G.

(57) **Abstract**

The invention regards to a bait hooking device, particularly for sport fishing, comprising a screw having a head (12) and a shank (11), the shank (11) being insertable into a bore formed within a bait (30), in which the screw is formed as a self-tapping screw (10), and the screw (10) being equipped with a built-in eye (13), machined out of especially the outside of its head (12) to be able to apply an end of an line (40), especially of a fishing line, to this built-in eye, directly or by interposition of a closed ring (20).

## Description

The invention regards to a bait hooking device according to the pre-charachterizing part of claim 1.

In sport fishing, a specific discipline called carp fishing prescribes the capture of freshwater fish, particularly carp, with baits made up of "boilies" or little cooked balls made with meal recipes of various kinds, said little balls being applied close to the fish hook.

In more detail, according to the current carp fishing technique, with the aid of a special tool, the fisherman perforates the ball-shaped bait, which is sufficiently rigid, and passes the end of a bait line through it, with the aid of a little steel hook or with the same perforation tool, and then ties said end to the same little ball, before immersing it with the fish hook into the water, for fishing.

Another known system for applying the ball-shaped bait consists of making by perforation a through-hole on the bait, again using a special punch, then applying a through-pin, said pin being equipped with an end with a ring, to anchor it to the fishing line, whilst on the opposite end and jutting out of the ball, a nut is applied to close and block the bait itself, before immersing it into the water with the hook.

These systems for fixing the bait to the fisherman's fish hook are clearly difficult to apply, owing to the small size of the boilies and of the tools or hooks to be used, and they can therefore easily be lost in the grass, gravel or the often impassable banks of fishing spots, and the baits themselves are often broken or lost and need to be replaced without then being able to be used for fishing. This means, apart from anything else, also a considerable loss of time and patience by the fisherman whilst trying to hook the bait, which is however indispensable for the subsequent actual fishing stage.

An object of this innovation is to provide a bait hooking device making possible to simplify, especially to simplify as much as possible a bait hooking phase, allowing a fisherman to enjoy his time and knowledge of the sport. Especially, a number of tools currently necessary for said hooking should be reduced, doing away with said hooks or tools for perforating and passing the end of the line to be tied, as well as the possibility of frequently losing them.

This object is solved by a bait hooking device according to the features of claim 1 and, respectively, by a method for using a bait hooking device according to the features of claim 9. Preferred embodiments are subject matter of dependent claims.

Especially, there is provided a preferred bait hooking device, particularly for sport fishing, comprising a screw having a head and a shank, the shank being insertable into a bore formed within a bait, in which the screw is formed as a self-tapping screw, and the screw being equipped with a built-in eye, machined out of especially the outside of its head to be able to apply an end of an line, especially of a fishing line, to this built-in eye, directly or by interposition of a closed ring.

Especially, there is provided a preferred bait hooking device, especially quick bait hooking device, particularly for sport fishing, simplifying fixing a bait at a fish hook by eliminating the devices for perforating and pushing a thread into the bait, characterised by the fact that it envisages the design of a self-tapping screw, especially being selectable of variable length in relation to the type and diameter of the baits to be applied, said screw being equipped with a built-in eye, machined out of the outside of its head, and where an end of a line, especially of the fishing line, is applicable to this built-in eye, directly or by the interposition of a closed ring.

Further, there is provided a preferred method for using a bait hooking device especially for using such a bait hooking device, characterised by the fact that the same device is basically made up of a self-tapping screw, said screw being inserted into the bait, especially boilie, by screwing its shank, subject to selecting a screw that has its shank length shorter than the diameter of the bait.

These and other scopes are in effect fully achieved with the design of the hooking device in question, which consists basically of a self-tapping screw, being selectable of variable length in relation to the type of bait to which it must be applied, said screw being equipped with a built-in eye or with two openings at opposing sides of the head formed and with inserted two end sections, advantageously of a wire, forming a not closed ring, positioned outside its head, preferably with a spherical cap, to match the spherical shape of the bait, and on said built-in eye a little ring is applied hooking the end of the line, close to the hook.

Especially, there is provided a new device for hooking bait to a fisherman's fishing line, the device simplifying this hooking operation, doing away with the use of the current devices for perforating and pushing the thread onto the bait.

The main feature of a preferred embodiment of this invention is that it envisages the design of a self-tapping screw, of variable length in relation to the type and diameter of the baits or boilies to be applied to the end of the thread to which the fish hook is attached, said screw being equipped with a built-in eye, machined out of the outside of its head, and where on this built-in eye a hooking ring for said thread is applied.

According to a preferred embodiment the screw has a shank with a preset length, in relation to diameters of such baits or boilies available on the market.

Especially, that shank of such screw is basically cylindrical and has a thread with at least one self-tapping turn.

According to preferred bait hooking device the head and the shank of the screw are joined together with a circular connection cavity surrounding the shank.

Such bait hooking device can be designed having an external surface of the head of the screw, which has a hollow or hollow axial eye, especially formed roughly in the shape of a circular crown.

In the hollow or axial eye of the screw there can be housed at least one closed ring.

A preferred bait hooking device comprises a fish hook being connected to the screw by the line.

The term line covers different forms of especially fishing lines like cord, string, filament or wire and can be formed by different materials like plastics, metal or natural fibres.

Especially, the term head of the screw defines an end section of the screw preferably but not necessarily reaching in radial direction beyond the outer dimension of its shank.

A better understanding of the solution proposed and a highlighting of the achievement of the scopes indicated are described in more detail below and are also illustrated, according to a purely indicative and non-restrictive structural form, with the aid of 3 drawings reproduced in the attached table, in which:
- Fig. 1: represents a vertical perspective view of a screw or hooking device designed according to this innovation;
- Fig. 2: represents an axial section view of the same device as Fig. 1; and
- Fig. 3: represents an axial section and partially exploded view of the same device as Figs. 1 and 2, represented at the stage when it is being applied to a fisherman's bait and fish hook.

In all the figures the same details are shown, or are understood to be shown, with the same reference number.

According to this example solution of the various figures attached, the device in question is basically made up of a screw, especially a self-tapping screw 10 to be inserted into a boilie being a bait or into a ball-shaped bait 30 of cooked meal, and with a hooking ring 20, joined to the same screw 10 with the end of a line 40 also supporting a fish hook 50. In other words, the screw 10 is connected with the hook 50 via the ring 20 and the line 40.

In more detail, the self-tapping screw 10 has a stem or shank 11 of selectable variable and standardised length, in relation to the likely diameter of the boilie bait 30, and a head 12 of said shank 11 contoured preferably in the shape of a hollow spherical cap, said head 12 being equipped with a circular crown shaped hollow axial slot or preferably an eye 13 housing a closed ring 20.

The shank 11 of said screw 10 is basically cylindrical and has at least one thread 14, preferably with a long lead and extending up to below the head 12 of the same screw 10.

Again in accordance with the example design, the head 12 has a connection cavity 15 around its shank 11, in order to ensure a functional advantage better illustrated below.

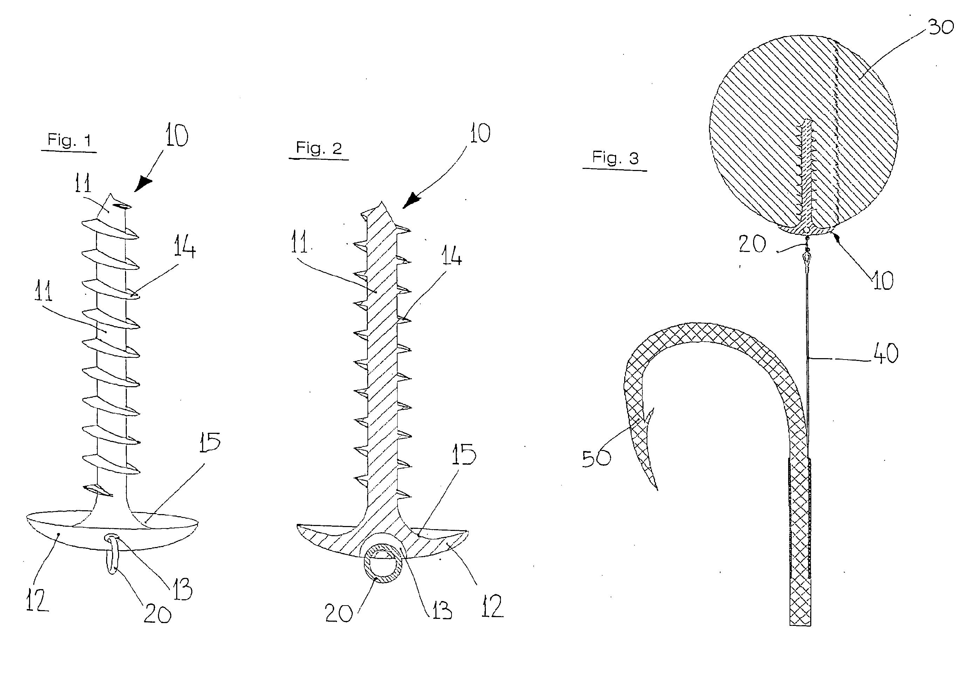

With reference to especially Fig. 3, the means of application is clear, as is the operation of the hooking device in question, for which one end of the line 40 that a fisherman has attached to his fishing rod, immediately after having been attached to the fish hook 50, according to a known technique, is made to pass through the ring 20, which is already firmly applied to the eye 13 of the head 12 of the screw 10, and is then tied, so as to remain closed and attached to the same ring 20.

Whether before or after the phase of fixing the line 40 to the ring 20 of the screw 10, the same screw 10 is applied by self-tapping into the bait 30, so that its head 12 abuts against the spherical surface of the bait itself 30. The mealy material with which said artificial bait 30 is normally made allows an easy self-tapping of its perforation forming a bore, said perforation being made by the advancement of the shank 11 and only for its length but, given the cylindricity of same shank 11, it does not create problems due to the formation of any cracks and superficial openings of the same bait 30. Consequently, when the head 12 of the screw 10 has come into contact with the external surface of said bait 30, an integral link is made with the line 40 of the fishing rod or fishing line, thus making the bait itself ready to be cast into the water with its hook 50, without the need for any further fixing operation.

Therefore the current job of applying the bait 30 to the hook 50 is simplified considerably, in accordance with the main scope proposed, without the need to perforate the bait 30 in advance, and then allowing a screw to pass there and closing this screw with a nut, according to the difficult technique currently prevalent in the type of sports fishing specified.

The device described and illustrated up to now then allows one to eliminate the use and need to equip oneself hooks and tools for threading the fishing line to the bait, as well as the frequent current chance of losing said equipment, allowing all fishermen to make better use of their time and skills, consistent with other scopes specified.

With reference to the connection cavity 15, between the head 12 and shank 11 of the screw 10, we can highlight the fact that, with a proper closing of the screw 10 onto the bait 30, the whole surface of the bait 30 that comes into contact with the same head 12 is covered by said connection cavity 15, which considerably inhibits or limits the infiltration of water, when the bait itself 30 is cast into the sea or whichever waters are to be fished. In this way, said connection cavity 15 ensures a longer duration of the boilie 30 when it is immersed in water, thus conferring a further advantage of this new technique.

According to a preliminary structural variation of the proposed solution, particularly in the case of use of baits impregnated with ethyl alcohol or other substances scented for attracting fish, the spherical capped head 12 with its connection cavity 15 is advantageously replaced by a normal, for example cylindrical, head, even with a shorter diameter, but in any case without the connection cavity 15 connecting to the shank 11. Thus, the perforation and screwing of the same threaded shank 11 in the scented bait 30 allows the bait itself to release the scent in the water, albeit allowing the bait itself 30 to become impregnated with water and therefore making it last a shorter time.

According to a further structural variation, which however seems less favourable than that described above, it is also possible to design a single spiral, for example out of prestressed steel, without the core of the shank 11 and the head 12, with one end ring shaped 20, in order to carry out a function similar to that of the device illustrated up to now.

Naturally, the design illustrated until now, can also be designed in other structural forms, for example, it is possible to eliminate the ring 20 interposed between the screw 10 and the end of the line 40, making the end of the fishing line 40 pass directly into the eye 13, before tying it to itself, just as it is possible to equip the hook 50 with its own ring to be hooked directly or indirectly to the same screw 10, for example by a knot of the end of the line 40.

Furthermore, instead of fixing the end of the fishing line 40 in the ring 20, there can be used a seperate line to fix the ring at the hook 50 or to its fishing line.

These and other similar amendments or adjustments, are in any case understood to be part of the originality of the invention being protected.

## Claims

1. Bait hooking device, particularly for sport fishing, comprising a screw having a head (12) and a shank (11), the shank (11) being insertable into a bore formed within a bait (30),
**characterised in that**
- the screw is formed as a self-tapping screw (10), and
- the screw (10) being equipped with a built-in eye (13) or with two openings at opposing sides of the head formed and with inserted two end sections, advantageously of a wire, forming a not closed ring, machined out of especially the outside of its head (12) to be able to apply an end of a line (40), especially of a fishing line, to this built-in eye, directly or by interposition of a closed ring (20).

2. Bait hooking device, especially quick bait hooking device, especially as per claim 1, particularly for sport fishing, simplifying fixing a bait (40) at a fish hook (50) by eliminating the devices for perforating and pushing a thread (14) into the bait (40), **characterised by** the fact that it envisages the design of a self-tapping screw (10), especially being selectable of variable length in relation to the type and diameter of the baits (40) to be applied, said screw (10) being equipped with a built-in eye (13), machined out of the outside of its head (12), and where an end of a line (40), especially of the fishing line, is applicable to this built-in eye (13), directly or by the interposition of a closed ring.

3. Bait hooking device as per claim 1 or 2, **characterised by** the fact that the screw (10) has a shank (11) with a preset length, in relation to diameters of such baits (40) or boilies available on the market.

4. Bait hooking device as per at least one of claims 1 to 3, **characterised by** the fact that shank (11) of each screw (10) is basically cylindrical and has a thread (14) with at least one self-tapping turn.

5. Bait hooking device as per at least one of claims 1 to 4, **characterised by** the fact that the head (12) and the shank (11) of the screw (10) are joined together with a circular connection cavity (15) surrounding the shank (11).

6. Bait hooking device as per at least one of claims 1 to 5, **characterised by** the fact that an external surface of the head (12) of the screw (10) has a hollow or hollow axial eye (13), especially formed roughly in the shape of a circular crown.

7. Bait hooking device as per at least one of claims 1 to 6, **characterised by** the fact that in the hollow or axial eye (13) of the screw (10) is housed at least one closed ring (20).

8. Bait hooking device as per at least one of claims 1 to 7 comprising a fish hook (50) connected to the screw (10) by the line (40).

9. Method for using a bait hooking device especially for using a bait hooking device as per at least one of claims 1 or 8, **characterised by** the fact that the same device is basically made up of a self-tapping screw (10), said screw (10) being inserted into the bait (30), especially boilie, by screwing its shank (11), subject to selecting a screw (10) that has its shank length (11) shorter than the diameter of the bait (30).
